# EUROPEAN PATENT APPLICATION

(11) **EP 4 212 416 A1**
(43) Date of publication of application: **19.07.2023**
(21) Application number: 23151291.4
(22) Date of filing: 12.01.2023
(51) Int. Cl.: B62H 1/02, B62K 25/02, B62K 19/40

(54) **DEVICE FOR FIXING A CYCLE STAY TO A LOW CHAINSTAY OF A BICYCLE**

(30) Priority: 13.01.2022 IT 202200000446
(71) Applicant: Ursus S.P.A., 36027 Rosa' VI (IT)
(72) Inventor: FERRONATO, Sergio, 36027 ROSA' (VI) (IT)
(74) Representative: Marchioro, Paolo

(57) **Abstract**

The present invention concerns a device (10) for fixing a cycle stay to a low chainstay of a bicycle, comprising:
- a cycle stay (11) comprising a fixing bracket (12) and a rest leg (13), said rest leg (13) being pivoted to said fixing bracket (12);
- a box of the central movement (14) of a bicycle;
- a rear fork (15);
- a low chainstay (16) interposed between said box of the central movement (14) and said rear fork (15).

The low chainstay (16) comprises:
- at least one tubular portion (16a) having a development axis (X);
- a load-bearing block (17) configured to support said cycle stay (11).

The load-bearing block (17) is fixed to the at least one tubular portion (16a) and is positioned substantially coaxially with respect to the development axis (X) of said tubular portion (16a).

## Description

The invention concerns a device for fixing a cycle stay to a low chainstay of a bicycle.

Nowadays a cycle stay generally consists of:
- a fixing bracket, configured to be fixed to a central or rear portion of the frame of a bicycle;
- a rest leg articulated to the fixing bracket.

A cycle stay can therefore be:
- of central type: fixed under the frame in a portion between the two wheels, to the lower chainstays of the frame, near the seat of the central movement;
- of rear type: fixed to a low chainstay, usually near or at the rear wheel.

The term "rear" means on the opposite side to the normal forward direction of a bicycle.

The expression "low chainstays" indicates the two tubular elements of the frame, substantially horizontal, between which the rear wheel of the bicycle is interposed, whereas "high chainstays" indicates the two corresponding tubular elements of the frame, substantially oblique, between which the rear wheel is interposed, and which develop between the seat tube and the low chainstays. Each low chainstay is joined to the respective high chainstay by means of a corresponding "rear fork", normally welded to the converging ends of a low chainstay and of the corresponding high chainstay.

Nowadays the fixing of a cycle stay to the low chainstay of a bicycle is done by fixing the fixing bracket of the cycle stay either to the rear end section of the low chainstay, or to the rear fork.

The fixing bracket is generally fixed directly to the low chainstay by means of threaded connections.

The low chainstay generally consists of a tubular body made of a metallic material whose main peculiarity is the light-weight, therefore the connection of the fixing bracket to the low chainstay by means of threaded connections can be little robust and prone to undergo deformations following particularly intense stresses.

To overcome this drawback, solutions are known today that envisage mounting on the low chainstay an auxiliary body to which the fixing bracket of the cycle stay can then be attached.

These solutions, although known and widespread, give rise to situations in which the fixing bracket protrudes laterally from the frame of the bike, causing an unfavourable encumbrance in aerodynamic terms and dangerous for a user who can rub against it with a calf.

Furthermore, such fixing systems require resorting to other components which entail an additional cost for the purchaser.

Furthermore, such known fixing systems may be aesthetically unpleasant. Furthermore, the fixing systems of known type provide threaded connections which comprise two screws and corresponding holes on the fixing bracket of the cycle stay.

These threaded connections do not provide for any possibility of adjusting any reciprocal incorrect positioning of the parts, and if the fixing bracket or the screwing holes are not made precisely, it is possible that the mounting of the cycle stay to the bicycle takes place in an irreparably inaccurate manner.

The task of the present invention is to develop a device for fixing a cycle stay to a low chainstay of a bicycle, capable of obviating the aforementioned drawbacks and limitations of the prior art.

In particular, an object of the invention is to develop a device capable of reducing the encumbrance generated by the cycle stay.

Another object of the invention is to develop a device that allows to fit a cycle stay in a less dangerous position for a user.

A further object of the invention is to develop a device that makes the bicycle more aerodynamic.

Still, an object of the invention is to develop a device for fixing a cycle stay to a low chainstay of a bicycle that has a better aesthetic impact than what is known.

The aforementioned task as well as the aforementioned objects are achieved by a device for fixing a cycle stay to a low chainstay of a bicycle according to claim 1.

Further characteristics of the device according to claim 1 are described in the dependent claims.

The task and the aforementioned objects, together with the advantages that will be mentioned below, are highlighted by the description of eight embodiments of the invention, which are given, by way of indication but not limitation, with reference to the attached drawing tables, where:
- Figure 1 represents a perspective view of a device according to the invention in a first embodiment thereof;
- Figure 1a represents an exploded perspective view of a device according to the invention;
- Figure 1b represents a front view of the device of Figures 1, 2, 3 and 1a;
- Figure 2 represents a longitudinal section of the device of Figure 1;
- Figure 3 represents another perspective view of the device according to the invention of Figures 1 and 2;
- Figure 4 represents a perspective view of a device according to the invention in a second embodiment thereof;
- Figure 5 represents a longitudinal section of the device of Figure 4;
- Figure 6 represents another perspective view of the device according to the invention of Figures 4 and 5;
- Figure 7 represents a perspective view of a device according to the invention in a third embodiment thereof;
- Figure 8 represents a longitudinal section of the device of Figure 7;
- Figure 9 represents a perspective view of a device according to the invention in a fourth embodiment thereof;
- Figure 10 represents a longitudinal section of the device of Figure 9;
- Figure 11 represents a perspective view of a device according to the invention in a fifth embodiment thereof;
- Figure 12 represents a longitudinal section of the device of Figure 11;
- Figure 13 represents a perspective view of a device according to the invention in a sixth embodiment thereof;
- Figure 14 represents a longitudinal section of the device of Figure 13;
- Figure 15 represents a perspective view of a device according to the invention in a seventh embodiment thereof;
- Figure 16 represents a longitudinal section of the device of Figure 15;
- Figure 17 represents another perspective view of the device of Figure 15;
- Figure 18 represents a perspective view of a device according to the invention in an eighth embodiment thereof;
- Figure 19 represents a longitudinal section of the device of Figure 18;
- Figure 20 represents another perspective view of the device of Figures 18 and 19.

With reference to the cited figures, a device for fixing a cycle stay to a low chainstay of a bicycle according to the invention is indicated, as a whole of a first embodiment, with number **10**.

The device **10** comprises:
- a cycle stay **11** in turn comprising a fixing bracket **12** and a rest leg **13,** which rest leg **13** is pivoted to the fixing bracket **12;**
- a box of the central movement **14** of a bicycle **B**;
- a rear fork **15;**
- a low chainstay **16** interposed between the box of the central movement **14** and the rear fork **15.**

The peculiarity of the device **10** according to the invention lies in the fact that the low chainstay **16** comprises:
- at least one tubular portion **16a** having a development axis **X;**
- a load-bearing block **17** configured to support the cycle stay **11.**

The load-bearing block **17** is fixed to said at least one tubular portion **16a** and is positioned substantially coaxially with respect to the development axis **X** of said at least one tubular portion **16a.**

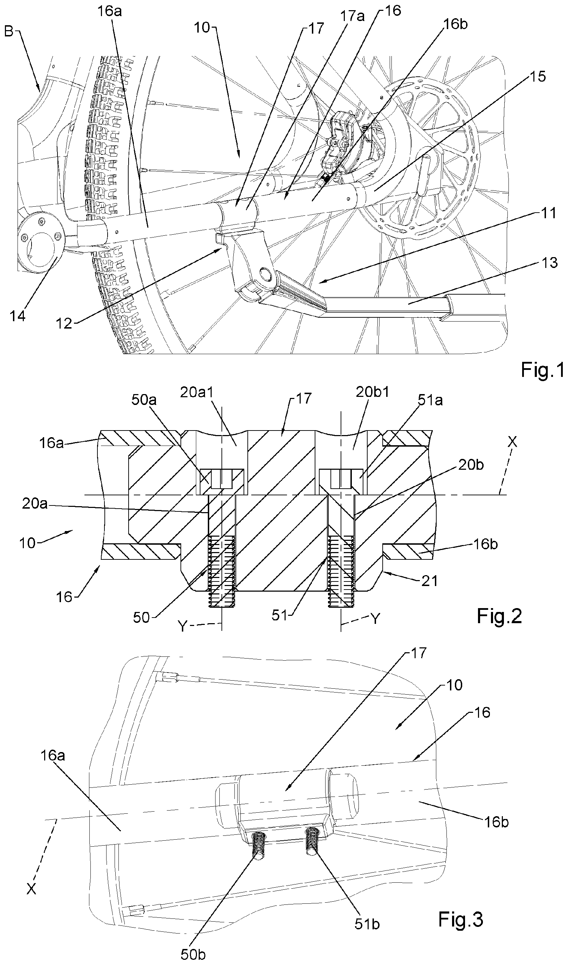

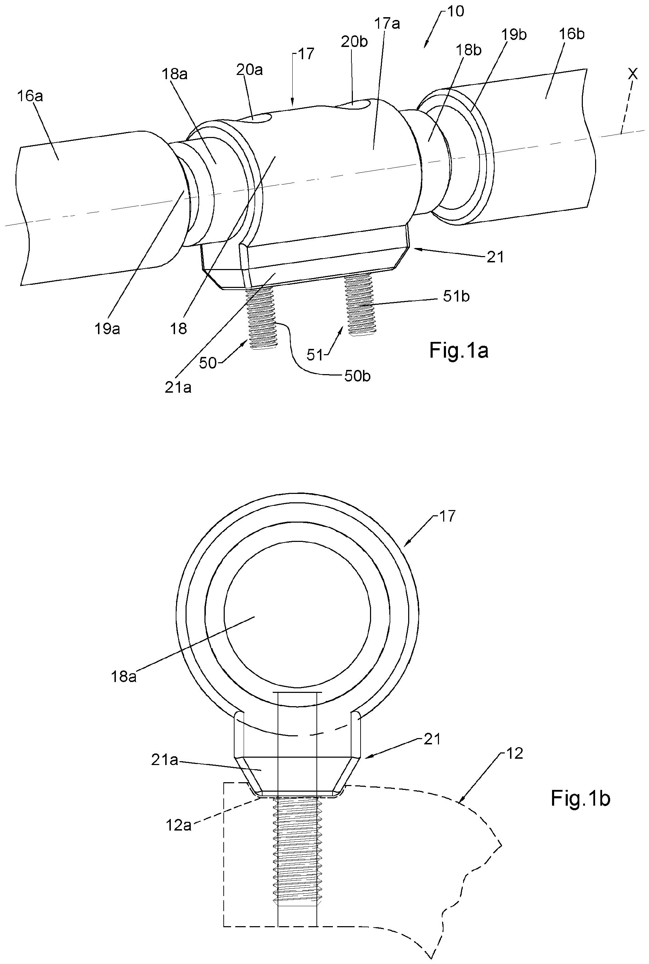

In the first embodiment of the device **10** according to the invention, represented in Figures 1, 1a, 2 and 3, the low chainstay **16** comprises two tubular portions **16a** and **16b,** a first tubular portion **16a,** at the front, and a second tubular portion **16b,** at the rear.

The load-bearing block **17** is interposed between said first tubular portion **16a** and the second tubular portion **16b.**

The load-bearing block **17** comprises an external visible surface **17a;** therefore, the load-bearing block **17** is visible, i.e. it is visible when the bicycle **B** on which it is fitted is in use.

Advantageously, but not exclusively, the load-bearing block **17** has an external profile of its cross-section that corresponds at least in part to the profile of the cross-section of said at least one tubular portion **16a.**

For example, in the first embodiment of the invention, the load-bearing block **17** has an external profile of its own cross-section that in the upper part and in the opposite lateral parts corresponds to the profile of the cross-section of the first tubular portion **16a** and of the second tubular portion **16b;** thanks to this technical expedient, the device **10** takes on an important value in terms of encumbrances, since it does not exceed the radial encumbrances of the tubular portions **16a** and **16b,** and in terms of visual impact, since such a technical solution does not reduce the aesthetic quality of the lower chainstays **16.**

The load-bearing block **17** consists of a solid body **18.**

Such a solid body **18** can be made of plastic material or of metallic material, for example steel, or of other similar and equivalent materials.

Said solid body **18** in turn comprises a central part and two opposite ends **18a** and **18b.**

In general, at least one of said opposite ends **18a** and **18b** is shaped so as to couple with a corresponding end **19a** of said at least one tubular portion **16a.**

In particular, in this first embodiment of the invention, a first end **18a** of the solid body **18** is shaped so as to couple with a corresponding first end **19a** of the first tubular portion **16a,** and the second end **18b** of the solid body **18** is shaped so as to couple with a corresponding second end **19b** of the second tubular portion **16b.**

In this first embodiment, the load-bearing block **17** comprises two opposite ends **18a** and **18b** which are shaped so as to each fit inside a corresponding end **19a, 19b** of said first **16a** and second **16b** tubular portions.

In general, in an alternative embodiment not illustrated for simplicity's sake, the low chainstay **16** comprises a single tubular portion **16a,** and the load-bearing block **17** is interposed between said tubular portion **16a** and the rear fork **15.**

Still in general, in another alternative embodiment not illustrated for simplicity's sake, the low chainstay **16** comprises a single tubular portion **16b,** and the load-bearing block **17** is interposed between said tubular portion **16b** and the box of the central movement **14.**

In general, therefore, the load-bearing block **17** is to be understood as being able to be positioned at any point of a low chainstay **16** along the development direction **X.**

Still in general, the load-bearing block **17** comprises at least one fixing hole **20a** for fixing said cycle stay **11** by means of a corresponding threaded connection.

Such at least one fixing hole **20a** develops according to a screwing direction **Y** transverse to the development axis **X.**

In the first embodiment described herein of the device **10** according to the invention, the device **10** comprises a load-bearing block **17** which, in turn, comprises two fixing holes **20a** and **20b** arranged aligned in the development direction **X.**

These two fixing holes **20a** and **20b** are to be understood being positioned along the respective screwing directions **Y** parallel to each other and both orthogonal to the development direction **X.**

In this first embodiment of the device **10,** the fixing holes **20a** and **20b** are through holes.

The fixing bracket **12** is fixed to said low chainstay **16** by means of two screws **50** and **51,** each screw comprising a screwing head **50a** and **51a** and a threaded shank **50b** and **51b**.

The screws **50** and **51** are arranged substantially vertically with respect to a normal setup of use of the bicycle **B** of which said low chainstay **16** is part.

The screws **50** and **51** are screwed into a corresponding fixing hole **20a** and **20b** with the screwing heads **50a** and **51a** being each arranged in a corresponding recess **20a1** and **20b1** that is coaxial and communicating with a corresponding fixing hole **20a** and **20b**.

Thanks to this technical solution, the heads of the screws **50** and **51** do not protrude from the low chainstay **16** and in no way can cause damage to a user. The threaded shanks **50b** and **51b** protrude from the load-bearing block **17** available for screwing to corresponding threaded holes of the fixing bracket **12** of the cycle stay **11.**

The fixing holes **20a** and **20b** and the screws **50** and **51** are configured and positioned in such a way that the fixing of the fixing bracket **12** to the load-bearing block **17** is done by screwing the screws **50** and **51** from top to bottom with respect to a normal setup of use of the bicycle **B** on which the device **10** according to the invention is fitted.

In general, the load-bearing block **17** comprises at least one centring shaping **21** configured to couple with a counter-shaped centring portion **12a** defined on said fixing bracket **12** of said cycle stay **11.**

The counter-shaped centring portion **12a** of the fixing bracket **12** is schematized in hatching in Figure 1b.

In this first embodiment of the device **10** according to the invention, the centring shape **21** comprises a wedge-shaped longitudinal relief **21a** that develops radially, with respect to said development axis **X,** so that both the fixing holes **20a, 20b** cross it.

In particular, this wedge-shaped longitudinal relief **21a** has a substantially truncated-pyramidal shape.

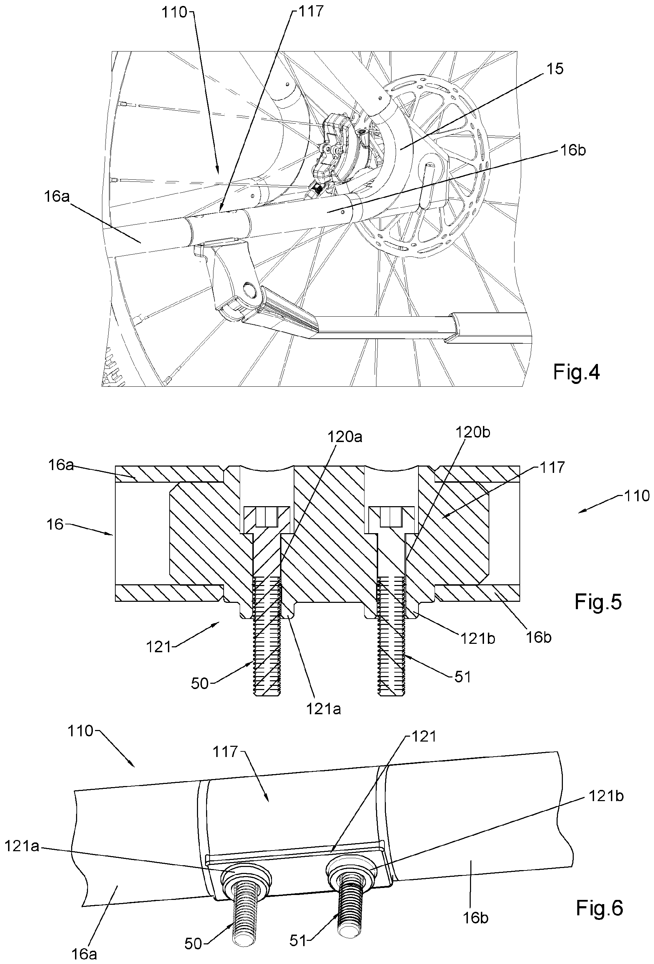

A second embodiment of the device according to the invention is represented in Figures 4, 5 and 6 and is indicated therein with number **110.**

Said device **110** comprises a load-bearing block **117** substantially corresponding to the load-bearing block **17** described above for the first embodiment of the device **10** according to the invention.

Unlike the device **10** of the first embodiment described above, the load-bearing block **117** comprises a centring shaping **121** which in turn comprises two annular reliefs **121a** and **121b.**

Each of said annular reliefs **121a** and **121b** develops around a corresponding fixing hole **120a** and **120b.**

The threaded connections comprise, as described above, two fixing holes **120a** and **120b** and corresponding screws **50** and **51.**

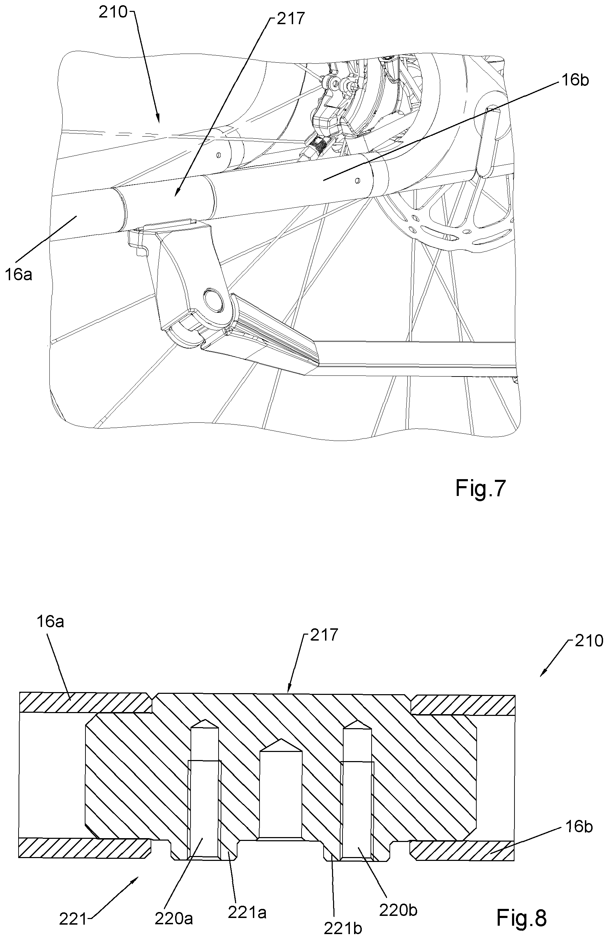

A third embodiment of the device according to the invention is represented in Figures 7 and 8 and is indicated therein with number **210.**

Said device **210** comprises a load-bearing block **217** substantially corresponding to the load-bearing block **17** and **117** described above for the first embodiment of the device **10** and for the second embodiment of the device **110** according to the invention.

Unlike the device **10** of the first embodiment and the device **110** of the second embodiment described above, the device **210** of the third embodiment of the invention comprises a load-bearing block **217** which in turn comprises at least one fixing hole **220a** which is a blind hole.

In particular, in said third embodiment of the device **210** according to the invention, the load-bearing block **217** comprises two fixing holes **220a** and **220b** which are both blind holes.

The load-bearing block **217** comprises a centring shaping **221** which in turn comprises two annular reliefs **221a** and **221b.**

Each of said annular reliefs **221a** and **221b** develops around a corresponding fixing hole **220a** and **220b.**

The threaded connections comprise, as described above, two fixing holes **220a** and **220b** and corresponding screws **50** and **51,** the latter not illustrated for simplicity's sake.

The fixing holes **220a** and **220b** and the screws **50** and **51** are configured and positioned in such a way that the fixing of the fixing bracket **12** to the load-bearing block **217** is done by screwing the screws **50** and **51** from bottom to top with respect to a normal setup of use of the bicycle **B** on which the device **210** according to the invention is fitted.

It is to be understood that the load-bearing block **17, 117, 217** as well as the load-bearing blocks described below in other embodiments can be positioned in any angular position with respect to the development direction **X** of the low chainstay **16.**

Thus, by way of example, the fixing holes **220a** and **220b,** blind, can be positioned so that they are open downwards, or so that they are open laterally, or so that they are open upwards.

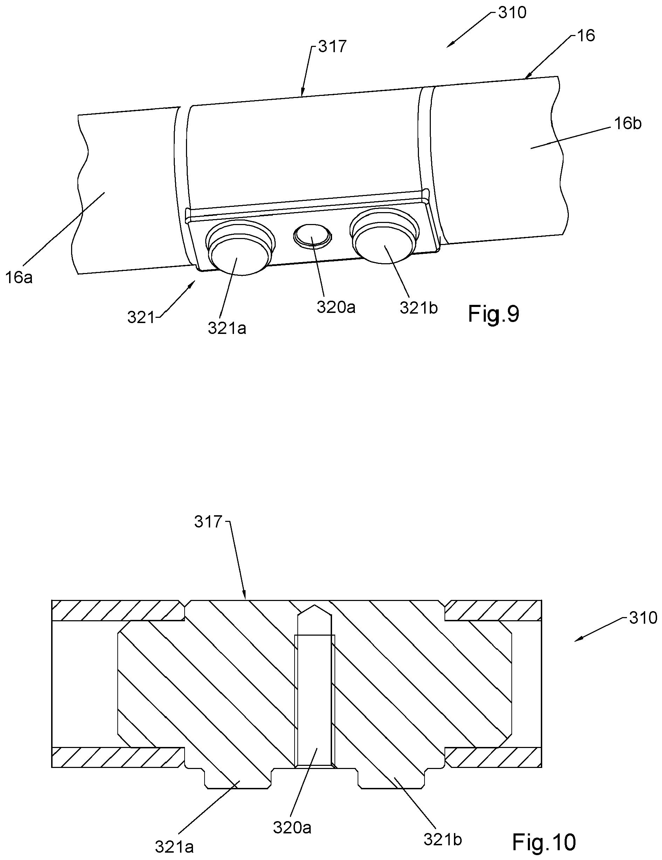

A fourth embodiment of the device according to the invention is represented in Figures 9 and 10 and is indicated therein with number **310.**

Said device **310** comprises a load-bearing block **317** substantially corresponding to the load-bearing block **17, 117** and **217.**

Unlike the previous embodiments of the invention, the device **310** of the fourth embodiment of the invention comprises a load-bearing block **317** which, in turn, comprises a single fixing hole **320a** which is a blind hole.

In particular, the load-bearing block **317** comprises a centring shaping **321** which in turn comprises two annular reliefs **321a** and **321b.**

Each of said annular reliefs **321a** and **321b** develops on the sides of the fixing hole **320a** in the development direction **X.**

The threaded connections comprise, as described above, a fixing hole **320a** arranged substantially centrally to the load-bearing block **317,** and a corresponding screw, not illustrated for simplicity's sake.

The fixing hole **320a** and the corresponding screw are configured and positioned in such a way that the fixing of the fixing bracket **12** to the load-bearing block **317** is done by screwing the screw from bottom to top with respect to a normal setup of use of the bicycle **B** on which the device **310** according to the invention is fitted.

It is to be understood that the load-bearing block **317** can be positioned in any angular position with respect to the development direction **X** of the low chainstay **16.**

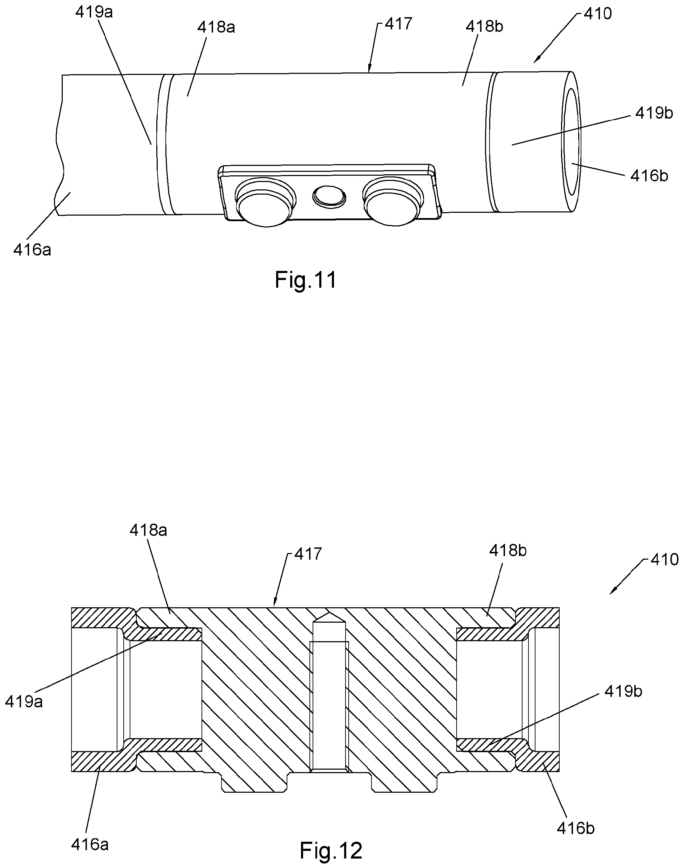

A fifth embodiment of the device according to the invention is represented in Figures 11 and 12 and is indicated therein with number **410.**

Such device **410** comprises a load-bearing block **417.**

In such fifth embodiment of the device **410** according to the invention, the load-bearing block **417** comprises two opposite ends **418a** and **418b** shaped so as to surround a corresponding end **419a** and **419b** of said first **416a** and second **416b** tubular portions.

This peculiarity described above can also be comprised from the other embodiments described herein of the device according to the invention.

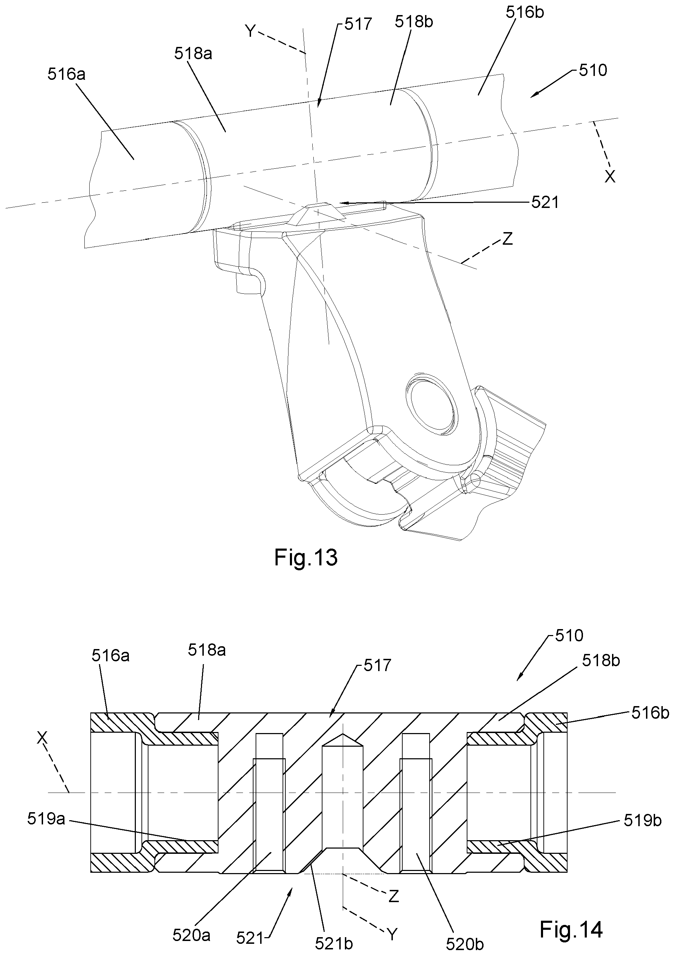

A sixth embodiment of the device according to the invention is represented in Figures 13 and 14 and is indicated therein with number **510.**

Such device **510** comprises a load-bearing block **517.**

This load-bearing block **517** comprises a centring shaping **521.**

This centring shaping **521** comprises a cavity **521b.**

In particular, this cavity **521b** is positioned between two fixing holes **520a** and **520b.**

This cavity **521b** has a substantially truncated-pyramidal shape that develops transversely according to a direction that is orthogonal to the plane comprising both the development direction **X** and the radial direction **Y.**

The load-bearing block **517** comprises two opposite ends **518a** and **518b** shaped so as to surround a corresponding end **519a** and **519b** of said first **516a** and second **516b** tubular portions.

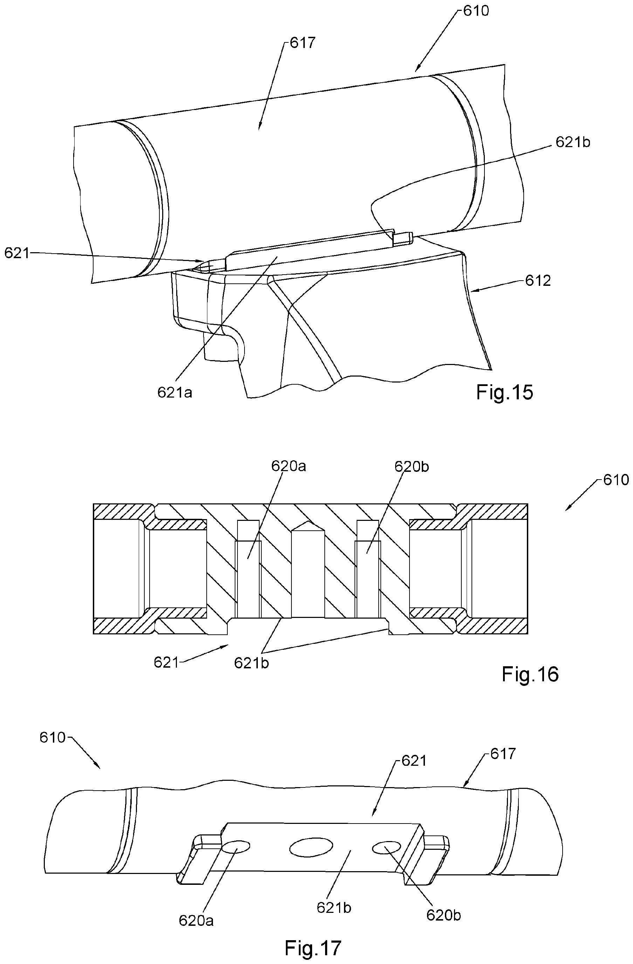

A seventh embodiment of the device according to the invention is represented in Figures 15, 16 and 17 and is indicated therein with number **610.**

Such device **610** comprises a load-bearing block **617.**

The load-bearing block **617** also comprises a centring shaping **621.**

The centring shaping **621** comprises a cavity **621b** configured so that both fixing holes **620a, 620b** cross it.

The counter-shaped centring portion **621a** of the fixing bracket **612** is visible in Figure 15.

For all the embodiments described above, and in general for the invention, it is to be understood that the load-bearing block **17, 117, 217, 317, 417, 517, 617** can be positioned in any angular position with respect to the development direction **X** of the low chainstay **16.**

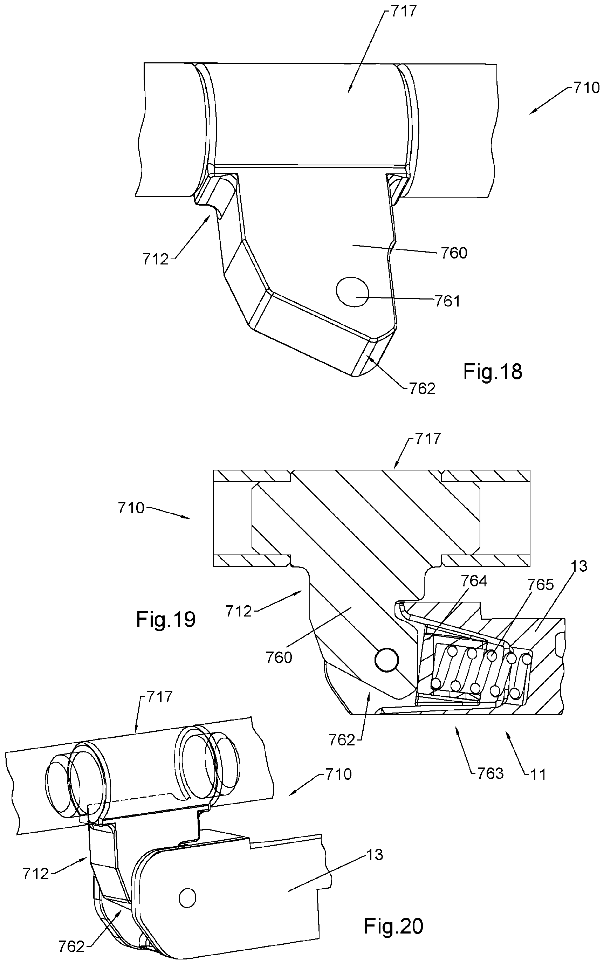

An eighth embodiment of the device according to the invention is represented in Figures 18, 19 and 20 and is indicated therein with number **710.**

Such device **710** comprises a load-bearing block **717.**

This load-bearing block **717** forms a single body with a fixing bracket **712.**

In particular, the load-bearing block **717** comprises a radial appendage **760** configured to be hinged to a rest leg **13** of the cycle stay **11.**

The radial appendage **760** therefore comprises a through hole **761** for a hinge pin of the rest leg **13.**

The radial appendage **760** comprises a shaped portion **762** configured so as to be part of a mechanism **763** for stabilizing the position of the rest leg **13** in two different alternative setups:
- a first lowered setup of use, i.e. with the bike resting on the rest leg **13;**
- a second raised travel setup, i.e. with the rest leg positioned substantially in parallel with the low chainstay and with the bike that can be ridden regularly.

This mechanism **763** for stabilizing the position of the rest leg **13** is to be understood as a mechanism known per se.

For example, said mechanism **763** comprises a pusher **764** and a pushing spring **765** which are positioned in a head portion of the rest leg **13** so that said pusher **764** pushes against the shaped portion **762.**

For all the embodiments described above, and in general for the invention, it is to be understood that the load-bearing block **17, 117, 217, 317, 417, 517, 617, 717** can be positioned at any point of a low chainstay **16** along the development direction **X.**

The load-bearing block **17, 117, 217, 317, 417, 517, 617, 717** is fixed to the portions of the low chainstay, or to the rear fork, or to the box of the central movement **14,** by welding, or by riveting, or by threaded connections, or by interference couplings, or by other similar and equivalent means to be understood as known per se.

In general, in all the embodiments described above, the fixing bracket **12, 612,** even if not represented, is to be understood as comprising a counter-shaped centring portion, for example indicated with **12a** for the first embodiment of the invention, configured to couple with the centring shaping **21, 121, 221, 321, 521, 621.**

It has in practice been established that the invention achieves the intended task and objects.

In particular, the invention has developed a device capable of reducing the encumbrance generated by the cycle stay.

In addition, with the invention a device has been developed that allows to fit a cycle stay in a less dangerous position for a user.

In addition, with the invention a device has been developed that makes the bicycle more aerodynamic.

Furthermore, with the invention a device has been developed for fixing a cycle stay to a low chainstay of a bicycle of better aesthetic impact than what is known.

Thanks to such a device according to the invention, the cycle stay can also be attached so that the heads of the screws are below the low chainstay.

Thanks to the presence of a relief and a counter-shaped bas-relief, there is an important recovery of the coupling plays between the cycle stays and the low chainstay of the bicycle.

The invention thus conceived is susceptible of numerous modifications and variations, all of which are within the scope of the inventive concept; moreover, all the details may be replaced by other technically equivalent elements.

In practice, the components and the materials used, so long as they are compatible with the specific use, as well as the contingent shapes and dimensions, could be of any type according to requirements and the state of the art.

Where the features and techniques mentioned in any claim are followed by reference marks, such reference marks are intended to be affixed solely for the purpose of increasing the intelligibility of the claims and, consequently, such reference marks have no limiting effect on the interpretation of each element identified by way of example by such reference marks.

## Claims

1. Device (10, 110, 210, 310, 410, 510, 610, 710) for fixing a cycle stay to a low chainstay of a bicycle, comprising:
- a cycle stay (11) comprising a fixing bracket (12, 612, 712) and a rest leg (13), said rest leg (13) being pivoted to said fixing bracket (12, 612, 712);
- a box of the central movement (14) of a bicycle;
- a rear fork (15);
- a low chainstay (16) interposed between said box of the central movement (14) and said rear fork (15),
**characterized in that**
said low chainstay (16) comprises:
- at least one tubular portion (16a, 416a, 516a) having a development axis (X);
- a load-bearing block (17, 117, 217, 317, 417, 517, 617, 717) configured to support said cycle stay (11),
said load-bearing block (17, 117, 217, 317, 417, 517, 617, 717) being fixed to said at least one tubular portion (16a, 416a, 516a) and being positioned substantially coaxially with respect to the development axis (X) of said at least one tubular portion (16a).

2. Device according to claim 1, **characterized in that** said low chainstay (16) comprises two tubular portions (16a, 16b, 416a, 416b, 516a, 516b), a first tubular portion (16a), at the front, and a second tubular portion (16b), at the rear, said load-bearing block (17, 117, 217, 317, 417, 517, 617, 717) being interposed between said first tubular portion (16a, 416a, 516a) and said second tubular portion (16b, 416b, 516b).

3. Device according to claims 1 or 2, **characterized in that** said load-bearing block (17) comprises an external visible surface (17a).

4. Device according to one or more of the preceding claims, **characterized in that** said load-bearing block (17, 117, 217, 317, 417, 517, 617, 717) has an external profile of its cross-section that corresponds at least in part to the profile of the cross-section of said at least one tubular portion (16a).

5. Device according to one or more of the preceding claims, **characterized in that** said load-bearing block (17, 117, 217, 317, 417, 517, 617, 717) consists of a solid body (18) in turn comprising a central part and two opposite ends (18a, 18b, 418a, 418b, 518a, 518b), at least one of said opposite ends (18a, 18b, 418a, 418b, 518a, 518b) being shaped so as to couple with a corresponding end (19a, 419a, 519a) of said at least one tubular portion (16a, 416a, 516a).

6. Device according to one or more of the preceding claims, **characterized in that** said load-bearing block (17, 117, 217, 317, 417, 517, 617) comprises at least one fixing hole (20a, 120a, 220a, 320a, 520a, 620a) for fixing said cycle stay (11) by means of a corresponding threaded connection, said fixing hole (20a, 120a, 220a, 320a, 520a, 620a) developing according to a screwing direction (Y) transverse to said development axis (X).

7. Device according to the preceding claim, **characterized in that** said at least one fixing hole (20a, 120a) is a through hole.

8. Device according to claim 6, **characterized in that** said at least one fixing hole (220a, 320a, 520a, 620a) is a blind hole.

9. Device according to claim 6 or 7, **characterized by** comprising two fixing holes (20a, 20b, 120a, 120b, 220a, 220b, 520a, 520b, 620a, 620b) arranged aligned in said development direction (X).

10. Device according to one or more of the preceding claims, **characterized in that** said load-bearing block (17, 117, 217, 317, 417, 517, 617) comprises at least one centring shaping (21, 121, 221, 321, 521, 621) configured to couple with a counter-shaped centring portion (12a) defined on said fixing bracket (12) of said cycle stay (11).

11. Device according to the preceding claim, **characterized in that** said at least one centring shaping (21) comprises a wedge-shaped longitudinal relief (21a) that develops radially, with respect to said development axis (X) so that both fixing holes (20a, 20b) cross it.

12. Device according to claim 10, **characterized in that** said at least one centring shaping (121, 221, 321) comprises two annular reliefs (121a, 121b, 221a, 221b, 321a, 321b).

13. Device according to one or more of the preceding claims, **characterized in that** said load-bearing block (17) comprises two opposite ends (18a, 18b) which are shaped so as to each fit inside a corresponding end (19a, 19b) of said first (16a) and second (16b) tubular portions.

14. Device according to one or more of claims 1 to 12, **characterized in that** said load-bearing block (417, 517) comprises two opposite ends (418a, 418b, 518a, 518b) shaped so as to surround a corresponding end (419a, 419b, 519a, 519b) of said first (416a, 516a) and second (416b, 516b) tubular portions.

15. Device according to claim 10, **characterized in that** said centring shaping (521, 621) comprises a cavity (521b, 621b).

16. Device according to claims 1 to 5, **characterized in that** said load-bearing block (717) forms a single body with said fixing bracket (712).
